(19) Europäisches Patentamt
European Patent Office
Office européen des brevets

(11) EP 2 641 654 A1

(12) EUROPEAN PATENT APPLICATION

(43) Date of publication:
25.09.2013 Bulletin 2013/39

(21) Application number: 13160186.6

(22) Date of filing: 20.03.2013

(51) Int Cl.:
***B01D 71/76*** (2006.01) ***B01D 67/00*** (2006.01)
***C08F 226/06*** (2006.01) ***C08J 5/22*** (2006.01)
*B01D 71/28* (2006.01) *B01D 71/62* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.03.2012 NL 2008516**

(71) Applicant: **Voltea B.V.**
**2171 AE Sassenheim (NL)**

(72) Inventors:
- **van der Wal, Albert**
  **2341 LP Oegstgeest (NL)**
- **Dlugolecki, Piotr Edward**
  **80-296 Gdansk (PL)**
- **Reinhoudt, Hank Robert**
  **21613 DS Delft (NL)**
- **van Houtem, Michel Henri Chretien Joseph**
  **5613 MC Eindhoven (NL)**
- **Janssen, Henricus Marie**
  **5625 AM Eindhoven (NL)**

(74) Representative: **EP&C**
**P.O. Box 3241**
**2280 GE Rijswijk (NL)**

# (54) Method for preparing an anion exchange membrane with ion exchange groups and an apparatus for removal of ions

(57) The invention provides a method for preparing an anion exchange membrane with anion exchange groups. The method comprises polymerizing a first monomer with a functional group selected from the pyridine derivatives with a second monomer selected from the benzene derivatives such as for example styrene to form a copolymer. The copolymer may be crosslinked with a crosslinker. The functional group of the copolymer may be functionalized to an anion exchange group.

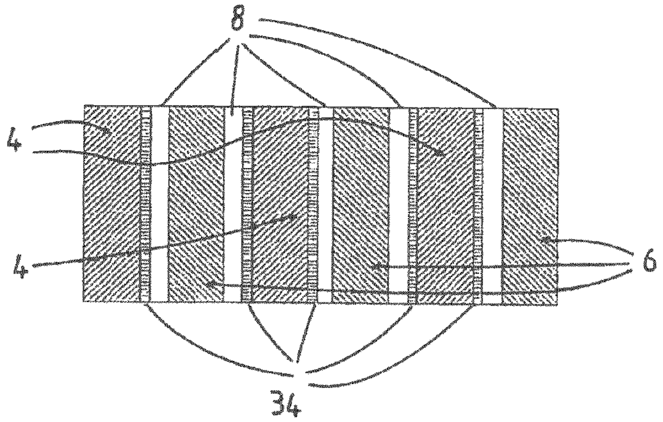


Fig.3



Printed by Jouve, 75001 PARIS (FR)

## Description

### Field

Method for preparing an anion exchange membrane with anion exchange groups comprising:

reacting a first monomer with a functional group with a second monomer to form a copolymer;
providing a crosslinker to the copolymer; and,
reacting the copolymer with the crosslinker to crosslink the copolymers.

### Background

In recent years one has become increasingly aware of the impact of human activities on the environment and the negative consequences this may have. Ways to reduce, reuse and recycle resources are becoming more important. In particular, clean water is becoming a scarce commodity. Therefore, various methods and devices for purifying water have been published.
A method for water purification is by capacitive deionisation, using an apparatus provided with a flow through capacitor (FTC) for removal of ions in water. The FTC functions as an electrically regenerable cell for capacitive deionisation. By charging electrodes, ions are removed from an electrolyte and are held in electric double layers at the electrodes. The electrodes can be (partially) electrically regenerated to desorb such previously removed ions without adding chemicals.
The apparatus for removal of ions comprises one or more pairs of spaced apart electrodes (a cathode and an anode) and a spacer, separating the electrodes and allowing water to flow between the electrodes. The electrodes are provided with current collectors or backing layers and a high surface area material, such as e.g. carbon, which may be used to store removed ions. The current collectors may be in direct contact with the high surface area material. Current collectors are electrically conductive and transport charge in and out of the electrodes and into the high surface area material.
A charge barrier may be placed adjacent to an electrode of the flow-through capacitor. The term charge barrier refers to a layer of material which is permeable or semi-permeable for ions and is capable of holding an electric charge. Ions with opposite charge as the charge barrier charge can pass the charge barrier material, whereas ions of similar charge as the charge of the charge barrier cannot pass the charge barrier material. Ions of similar charge as the charge barrier material are therefore contained or trapped either in e.g. the electrode compartment and/or in the spacer compartment. The charge barrier is often made from an ion exchange material provided in a membrane. A membrane provided with ion exchange material may allow an increase in ionic efficiency, which in turn allows energy efficient ion removal.

### Summary

It is an object of the invention to provide a method for preparing an anion exchange membrane.
Accordingly there is provided a method for preparing an anion exchange membrane with anion exchange groups comprising:

reacting at least a first monomer comprising vinyl-pyridine with a pyridine derivative as a functional group with at least a second monomer comprising styrene to form a substantial linear copolymer;
providing a crosslinker; and,
reacting the copolymer with the crosslinker, the crosslinker reacting with the pyridine derivative group of the copolymer crosslinking the copolymers and forming the anion exchange groups. The yield of reacting the vinyl-pyridine with the styrene is relatively high making the reaction producing the substantially linear copolymer favorable.

According to a further embodiment there is provided an apparatus for removal of ions, the apparatus being provided with: a first and second electrode; and, an anion exchange membrane on the first electrode, wherein the anion exchange membrane is obtainable by crosslinking a substantially linear copolymer according to the method.

### Brief description of the figures

Embodiments of the invention will be described, by way of example only, with reference to the accompanying schematic drawings in which corresponding reference symbols indicate corresponding parts, and in which:

Figure 1 shows a schematic cross-section of an apparatus for removal of ions;
Figure 2a shows a detail enlargement of the stack 3 of figure 1;
Figure 2b shows a detail of figure 1;
Figure 3 shows an electrode provided with anion exchange membrane according to the invention; and,
Figure 4 shows a voltage profile of a stack comprising the membrane according to an embodiment after 4h of operation.

**Detailed description of the invention**

Figure 1 shows a schematic cross-section of an apparatus for removal of ions 1 produced with a method according to the invention with a part of the housing removed. In the example the apparatus may comprise twelve flow through capacitor stacks 3. The flow through capacitor stack 3 may be provided with repeating units of a first electrode 4 (see figure 2a, which is an enlargement of a stack), a spacer 8, and a second electrode 6. The first electrode 4 may be provided with a first current collectors 5, (see figure 1) which may be bundled together with a first connector 11. The second electrode 6 may be provided with a second current collectors 9, which may equally be bundled together on the other side of the apparatus with the second connector 10.

The first connector 11 (see figure 2b, which is a partial enlargement of figure 1) may be used to clamp the first current collectors 5 together. The current collectors 5, 9 and the first connector 11 and the second connector 10 may be made of the same material e.g. carbon (e.g. graphite) to lower the electrical resistivity between the current collectors 5, 9 and the connectors 11, 10. The first connector 11 may be provided with inserts 15 e.g. from a metal, such as, for example copper. The inserts 15 may be screwed in the first connector 11 so as to assure low electrical resistivity between the insert 15 and the first connector 11. The power terminal 27 is a construction that is connected to both the power supply and one or more connectors 10, 11. The power terminal 27 may be fixed into the upper and/or bottom part 22, 24 and /or any other part of the housing. The power terminal 27 may be provided with a rail e.g. rod 17 made of, for example, metal e.g. copper to electrically connect all the first connectors 11 via their inserts 15 to a power source (not shown). The first connector 11 and the insert 15 may be provided with an opening for the rod 17. The inserts 15 and the rod 17 may be shielded of from the water inside the apparatus by e.g. resin, glue or a paste which functions as a water barrier. The resin, glue or a paste or any other water shielding material may optionally be applied to the hollow parts 19 of the connector 11 after compression of the stack. To circumvent that the resin may contaminate the stack 3 rubber rings 12 may be provided in the insert 15. A tray 13 may be provided to help manufacturing one stack 3 and assembling the stacks 3 together in a housing 21 of the apparatus. Within the housing the stacks 3 may be compressed between the top and bottom part 22, 24. The top part 23 of the housing 21 is provided with a feed-through allowing the rod 17 to make a connection with a power source. This way electrical charge can enter the first electrode via the first current collector 5 and also leave the electrode again, e.g. during regeneration of the electrodes. Water may be provided to an interior of the apparatus via a water inlet 26 the water is allowed to flow around the flow through capacitor stacks 3 and may enter the stacks via the spacers. The flow through capacitor stack 3 is provided with a hole in the middle of the stack. In the hole a circular tube 29 is provided and via the space between the hole and the tube the water may flow to an outlet 30. The interior of the tube 29 may be provided with a nut 35 and threaded bar 33 which may help to compress the electrodes in the stacks 3 and for compressing the stacks 3 between the upper and bottom part 22, 24 of the housing 21.

Compressing may occur during production of the apparatus, or optionally during maintenance. By compressing all the stacks at once it may be assured that the compression force is very similar or even equal for each stack and at the same equally or homogeneously distributed over the surface of the electrodes.

During manufacturing of the stack 3 a first electrode comprising a first current collector 5 may be provided in the tray 13. A spacer may be located on top of the first electrode; and a second electrode may be put on top of the spacer. Subsequently a spacer may be put on top of the second electrode followed by another first electrode. This may be repeated until for example 10 first and second electrode units are provided in the stack 3 held by the tray 13 each first electrode separated from a second electrode with a spacer. Subsequently a connector part 11 may be located on top of the current collectors 5 and a metal insert 15 may be screwed from the other side of the stack 3 through the tray 13 and the first current collectors 5 to fix the stack 3 to the tray 13.

The tray 13 and the stack 3 may be connected to the rod 17 of the first power terminal 27 by sliding the insert 15 over the rod 17 to allow a good electrical contact. The hole in the insert 15 may be of such a size that it allows for good electrical contact between the insert 15 and the rod 17 and at the same time allowing the insert 15 to slide over the rod 17. The connector 11 may be pressed on the tray 13 with the current collector 5 or multiple current collectors 5 in between the connector 11 and the tray 13 by screwing of the insert 15 in the connector part 11. To assure good electrical conductivity between the connector 11 and the first current collector 5 the pressure on the connector part 15 and the current collector may be less than 100 Bar, preferably less than 50 Bar, more preferably less than 20 Bar and most preferably around 10 Bar.

Multiple stacks 3 can be connected to the rod 17 and the stacks 3 may be connected in a similar way to the

second connector 10. A force may be exerted on the stacks 3 with the nut 35 and threaded bar 33 via the upper and bottom part 22, 24 so as to compress the first and second electrode in a first direction parallel to the length of the threaded bar 33 which is perpendicular to the main surface of the electrode. The force may exert a pressure on the stack of less than 5 Bar, preferably less than 2 Bar, more preferably less than 1 Bar and most preferably around 0,5 Bar.

The first and second connector 11, 10 allow for movement of the first and second current collector 5, 9 along the rod 17, 18 in the first direction such that the current collectors are not damaged by the compression force on the stack 3. The movements may be in the order of 0,05 to 10% of the height of the multiple stacks 3 in the first direction. After enough pressure is exerted on the stack a resin may be provided along or through the first and /or second connector 11, 10 in the hollow parts 19 of the connectors 10 , 11. The resin after hardening fixes the position of the connectors 10, 11 and may protect the (metal) inserts 15 and rod 17 from corrosion.

Figure 3 shows schematically the stacking of electrodes, spacers and membranes in an apparatus for removal of ions. The first (4) and second (6) electrodes are stacked with a spacer (8) and an ion exchange membrane. The anion exchange membrane (34) may be positioned between the first electrode (4) and the spacer (8). During ion removal a positive voltage may be applied to the first electrode. The anion exchange membrane may allow anions to pas through the membrane towards the first electrode while substantially blocking the cations.

**A method of preparing an anion exchange membrane with anion exchange groups**

In another aspect of the invention, a method is provided for preparing a crosslinked linear polymer with anion exchange groups comprising the steps of:

- polymerizing a first monomer with a functional group selected from the pyridine derivatives with a second monomer selected from the benzene derivatives to form a copolymer;
- providing a crosslinker to the copolymer;
- crosslinking the copolymer with the crosslinker; and,
- functionalizing the functional group to an anion exchange group.

**The copolymer**

The copolymer may be prepared by polymerization of at least two different (co) monomers. The co-monomer may comprise any carbon-carbon unsaturated compound that can be polymerized in an addition polymerization reaction. Preferably when a co-monomer is to be polymerized in an addition polymerization reaction, it can be an ethylenenically monounsaturated monomer, e.g. vinyl or allyl compounds. Many of such molecules are readily available. Examples of co-monomers are vinyl acids, vinyl acid esters, vinyl aryl compounds (including those with heterocyclic aryl groups), vinyl acid anhydrides, vinyl amides, vinyl ethers, vinyl amines, vinyl aryl amines, vinyl nitriles, vinyl ketones, vinyl aldehydes, terminal alkylenes, and derivatives of these monomers as well as corresponding allyl variants thereof. The co-monomer can be hydrophilic or hydrophobic (but hydrophobic polysiloxane chains may be less preferred); anionic, cationic, uncharged or zwitterionic; it can be a single molecule, oligomeric or polymeric molecule. Preferably the molecular weight is lower than 950 Dalton. The co-monomer can be uncharged, negatively, or positively charged. A co-monomer may also comprise a mixture of different co-monomers, which may add flexibility, as the polymers may comprise a variety of different co-monomers with different chemistries. A single co-monomer may be preferred however.

The copolymer may be formed by reacting a first monomer comprising a pyridine derivative as a functional group with at least a second monomer comprising a benzene derivative to form a copolymer. The first monomer with a functional group selected from the pyridine derivatives may include vinyl pyridines such as:

4-vinylpyridine; (CAS: 100-43-6)
3- vinylpyridine; (CAS 1121- 55- 7) ;
2-vinylpyridine;(CAS: 100-69-6)
2- methyl- 5- vinylpyridine; (CAS: 140- 76- 1) and
5- ethyl- 2- vinylpyridine; (CAS: 5408- 74- 2) .

Alternatively for a first monomer a functional (quaternizable) monomer possessing a ring structure (aliphatic and aromatic) may be used such as: N- vinyl pyrrolidone; N- vinylformamide; 4- vinylaniline; N- vinylcarbazole; 1-vinylimidazole; 1- vinyl- 1, 2, 4- triazole; 2- vinyl- 4, 5- dihydro- 1, 3- oxazole; 4, 4- dimethyl- 2- vinyl- 4, 5- dihydro- 1, 3-oxazole; 2- N- morpholinoethyl methacrylate. Further, aliphatic non- ring ('linear') functional (quaternizable) monomers (meth) acrylates with tertiary or secondary amine groups may be used as: 2- (dimethylaminoethyl) (meth) acrylate; 2-(diethylamino) ethyl (meth) acrylate; 2- (diisopropylamino) (ethyl) methacrylate; *tert*- butylaminoethyl (meth) acrylate; 3-(diethylamino) propyl (meth) acrylate; 3- (dimethylamino) propyl (meth) acrylate; (meth) acrylates with quarternary ammonium groups such as: 2- (meth) acryloyloxy) ethyl- trimethylammonium chloride.

The second monomer comprising a benzene derivative may comprise a polar styrene derivatives such as:

4- *tert*- butoxystyrene (CAS: 95418- 58- 9)
2,4-dimethylstyrene (CAS: 2234-20-0)
2,5-dimethylstyrene (CAS: 2039-89-6)
3-methylstyrene (CAS: 100-80-1)
4-methylstyrene (CAS: 622-97-9)
2, 4, 6- trimethylstyrene (CAS: 769- 25- 5)

Also more polar styrene derivatives which are more hydrophilic may be provided such as:

3,4-dimethoxystyrene (CAS: 6380-23-0)
4-methoxystyrene (CAS: 6380-23-0)
3-hydroxystyrene (CAS: 620-18-8)
4-hydroxystyrene (CAS: 2628-17-3)
4-acetoxystyrene (CAS: 2628-16-2)

Alternatively linear or branched $C_1$- $C_{20}$ acrylates and methacrylates may be used for the second monomer such as: methyl (meth) acrylate; stearyl (meth) acrylate; or 2- ethyl hexyl (meth) acrylate. Methacrylates with alcohol and/or ether groups may alternatively be used as second monomer such as: 2- hydroxyethyl (meth) acrylate; 3- hydroxypropyl (meth) acrylate; glycidyl (meth) acrylates; (meth) acrylic acid esters of (monomethoxy) glycols; tri (alkyloxy) silylalkylene (meth) acrylates such as: trimethoxysilylpropyl (meth) acrylate or Vinyl ethers and derivatives such as: methyl vinyl ether and vinyl acetate.

It is possible to apply more than one co-monomer, as this provides the opportunity to incorporate ion-exchange groups and/or reactive groups into the copolymer, while it also provides versatility to tailor the properties of the copolymer. Indeed, co-monomers may be preferred that provide the polymers with cations, i.e. anion exchange groups, with anions (i.e. cation exchange groups), with reactive groups and/or with hydrophilic or hydrophobic groups. Hydrophilic co-monomers may for example have alcohol groups, e.g. a co-monomer may be 2-hydroxyethyl (metha)crylate. Hydrophobic co-monomers are for example styrene or 2-ethylhexyl (meth)acrylate.

In another embodiment, a co-monomer may comprise reactive groups that are precursors to ion exchange groups, such as for example amine groups, particularly tertiary amine groups or pyridine groups, as upon quaternization with e.g halides or tosylates these reactive groups render quaternary ammonium or pyridinium anion exchange groups, respectively.

**The crosslinker and the linear copolymer**

For the preparation of the crosslinked linear polymer with ion exchange groups at least a copolymer and a crosslinker may be provided. The crosslinker according to the invention may comprise (on average) preferably two reactive groups, although three or more reactive groups are also possible. The copolymers according to the invention has reactive groups that enable reaction, forming a covalent bond, with the crosslinker.

Control over properties and performance of the crosslinked copolymer with ion exchange groups may be exerted by choosing the proper ratio between the copolymer and crosslinker, as this may determine the molar equivalence between the reactive groups on the copolymer and crosslinker. Levels of crosslinking can thus be controlled, as well as the concentration of the ion exchange groups in the crosslinked copolymer with ion exchange groups. The crosslinking reaction may be performed with the aid of solvents (e.g. alcohols or non-protic solvents), reagents (e.g. non-nucleophilic bases such as diisopropylethyl amine), activating agents (e.g. carbodiimide agents in reactions between acid and amine reactive groups) and/or catalysts (e.g. metal catalysts in reactions between alcohols and isocyanates). The reaction conditions may also be varied with regard to temperature, performing the reaction under inert gases such as argon or nitrogen, and/or using a light source as reaction initiator or stimulus.

The reactive groups of the crosslinker may react with reactive groups present in the copolymer. Thus, when one of the reactive groups of a crosslinker molecule reacts with a reactive group on a copolymer, the crosslinker molecule is covalently bound with the copolymer molecule. When the other reactive group of the crosslinker reacts with another copolymer molecule, forming a covalent bond with the other copolymer, the crosslinker has formed a crosslink between two copolymer molecules. Hence, when between copolymers crosslinks are formed, a crosslinked copolymer may be formed. Multiple crosslinks between copolymers may occur, and a network of crosslinked copolymers may be formed. The reactive groups of the crosslinker and copolymer may be complementary, such that crosslinkers may not react with each other, and/or copolymers may not react with each other, such that a crosslinker preferably reacts with a copolymer.

As copolymers may have a large number of reactive groups, multiple crosslinks between copolymers may be formed, so that the crosslinker has enabled the formation of a covalently connected network of copolymers.

It is possible that to some extent one of the reactive groups of a crosslinker molecule may react with a reactive group on a copolymer, while the other reactive group of the same crosslinker molecule may react with a second reactive group of the same coolymer, thus forming a covalent connection within one copolymer that does not contribute to network formation between copolymer molecules. Such intramolecular reactions, i.e. reactions within a single copolymer molecule, may be controlled by the varying the concentrations of reactants. Performing the crosslinking process at high concentrations of copolymers may favor the crosslinking process between copolymer molecules, as the chance of an intermolecular reaction between copolymers molecules and a crosslinker molecule will increase. Performing the reaction at dilute concentrations using a high amount of solvent will increase the occurrence of the intramolecular reactions, as the chance of intermolecular reactions between copolymers, of which one already has reacted with a crosslinking molecule is reduced, and an intramolecular crosslink may be favored. It is therefore preferred to do the crosslinking step at high concentrations of the copolymers, using little solvent, as this may be favorable for efficient crosslinking.

Linear copolymers may be less soluble, thus reactions are carried out in less favorable conditions however polymerizing a first monomer with a functional group selected from the pyridine derivatives with a second monomer selected from the benzene derivatives to form a copolymer may provide a well soluble copolymer and with regard to intermolecular crosslinking, when such copolymers are crosslinked, intramolecular crosslinks may more often be formed.

Properties of the linear copolymer, such as high solubility, low solution and melt viscosities and/or high number of reactive groups per molecule, thus may allow for an easy and efficient crosslinking step that can result in dense concentrations of ion exchange groups in the crosslinked membrane with ion exchange groups. Not much solvent may be needed to dissolve large quantities of copolymer, the solution can still have low viscosity which may make it more easy to handle. The crosslinking step may run smoothly and to high conversions, first in solution when there may be a high concentration in reactive groups, and after the solvent has evaporated in the bulk, viscosities can remain relatively low enhancing the diffusion of reactants.

The crosslinker or the linear copolymer may comprise an ion exchange group, such that when the linear copolymer and crosslinker are reacted a crosslinked polymer with ion exchange groups is formed.

As long as a crosslinker and a linear copolymer may have complementary reactive groups, i.e. they can react with each other forming crosslinks, such a crosslinker and linear copolymer may be used. Thus, the complementary reactive groups in the crosslinker and the linear copolymer may be any combination of two reactive groups that effectively leads to a covalent bond formation between the two crosslinker and linear copolymer. For example, one may comprise tertiary amine, pyridine or tertiary phosphine reactive groups, while the other may have halide, tosylate, mesylate or triflate reactive groups, upon crosslinking, quarternary ammonium, pyridinium or quarternary phosphonium crosslinkes may be formed.

Accordingly, examples of crosslinkers are diamines, dihalides, ditosylates, dimesylates, diols, dicarboxylic acids, di- activated esters, di- vinyl compounds, dianhydrides, particularly di cyclic anhydrides, di- isocyanates and di-epoxides. Crosslinkers that may be preferred are di- cyclic anhydrides, diamines, dipyridines and dihalides, more preferred may be diamines and dihalides, most preferred may be dihalides. For amine groups in the crosslinker, either primary or secondary amines can be used, which are reactive towards e.g. carboxylic acids and its derivatives or towards sulfonates and its derivatives. Tertiary amines can also be used and are preferred as these can generate ion exchange groups upon reaction with e.g. halides. In case halides are used, the more reactive halides are preferred, such as activated halides (e.g. benzyl chlorides), bromides and iodides. Crosslinker molecules are for example di- cyclic anhydrides such as pyromellitic dianhydride, EDTA- dianhydride, DTPA- dianhydride, benzophenone- 3, 3', 4, 4'- tetracarboxylic dianhydride, di primary amines such as diaminobutane and diaminohexane, di secondary amines such as piperazine and N, N'- dimethyl alkanediamines, di tertiary amines such as tetramethyl alkanediamines, dipyridines such as 4, 4'- bipyridine, dihalides such as 1, 6- diiodohexane, 1, 6- dibromohexane, 1, 10- dibromodecane.

In another embodiment of the method for preparing the crosslinked copolymer with ion exchange groups, an ion exchange group is formed during the crosslinking step. Preferably, the copolymer and crosslinker comprise reactive groups that are capable of reacting with each other forming a covalent bond and an ion exchange group. The ion exchange group that is formed may be an anion exchange group.

When the ion exchange group is an anion exchange group, the reactive group of the copolymer is preferably a pyridine and the reactive group of the crosslinker may be a halide, tosylate, mesylate or triflate group. Thus, pyridinium anion exchange groups may be created when the co polymer and the crosslinker have reacted.

The reaction of the linear copolymer with the crosslinker may result in the formation of an ion exchange group, while simultaneously crosslinking the linear copolymers, thus preparing a crosslinked copolymer with anion exchange groups. In addition, or alternatively, the linear copolymer and/or the crosslinker may already comprise ion exchange groups. With comprising ion exchange groups according to the invention it is meant that the ion exchange groups are covalently bound to the copolymer, crosslinker and/or crosslinked copolymer. Alternatively, ion exchange groups may also be covalenty bound to a crosslinked copolymer already prepared, forming a crosslinked copolymer with ion exchange

groups, although this may be less preferred as it would require an extra step. In any of those cases, a crosslinked linear copolymer with ion exchange groups is prepared.

In a further embodiment, the crosslinker and/or copolymer may comprise hydrophilic groups and hydrophobic groups. Providing such groups may affect the reaction conditions (e.g. solvents, reaction kinetics) during the crosslinking step and/or the properties of the crosslinked copolymer with ion exchange groups membrane material.

**Ion exchange group formation or activation without crosslinking the copolymer**

Formation of ion exchange groups may also be performed without crosslinking the copolymer. This way the level of crosslinking between and within the polymers may be reduced. The ion exchange capacity of the membrane may not be reduced. The ion exchange capacity may also be increased without increasing crosslinking. An advantage of a lower level of crosslinking may be that the membrane becomes less electrically resistant to ion transport. This in turn may improve the desalination performance of the FTC system.

The formation or activation of ion exchange groups can be performed by using a group activator. A group activator is a compound that can react with the copolymer, e.g. with a nitrogen atom or group at the copolymer, which leads to a charged group in the copolymer. The group activator according to invention comprises preferably one reactive group, which is capable of reacting with the copolymer. The copolymer according to the invention may have multiple groups that may react with the group activator and form a covalent bond. The average number of these reactive groups per copolymer molecule is at least 1, preferably at least 4, more preferably at least 6 and most preferably at least 10. An average number of reactive groups per copolymer may also further describe the copolymer as a copolymer usually consist of a heterogeneous mixture of macromolecules. Preferably, the reactive groups of the copolymer that may react with a group activator are the same reactive groups that may react with a crosslinker. The reactive group of the group activator may be the same reactive group of the crosslinker that can react with the copolymer. The reactive group of the group activator may be different from the reactive group of the crosslinker, as long as both can react with the reactive groups of the copolymer such different reactive groups for both the crosslinker and group activator may be contemplated.

Control over properties and performance of the crosslinked polymer with ion exchange groups may be exerted by choosing the proper ratio between the copolymer, group activator and crosslinker, as this may determine the molar equivalence between the reactive groups on the polymer, group activator and crosslinker. The molar ratio between the group activator and the crosslinker may be any number from 3:1 or even higher or be as low as 1:3 or even lower. The group activator may be reacted with the copolymer before, during or after the crosslinking step.

In one embodiment, the crosslinking step is performed with a limited amount of crosslinker such that not all the reactive groups of the copolymer available for crosslinking have reacted. In a post-crosslinking step, the reactive groups of the crosslinked polymer may be subjected to a reaction with a group activator such that remaining reactive groups of the copolymer react with the group activator.

In one embodiment, the crosslinking step is performed in the presence of both a crosslinker and a group activator. The ratio between the crosslinker and the group activator thus controlling the extent of crosslinking. Having a relative low amount of crosslinker may result in a lower extent of crosslinking. It is understood that not only the ratio of crosslinker and group activator may determine the extent of crosslinking, e.g. the reactivity of the crosslinker and group activator also determine the extent of crosslinking. The molar ratio between the group activator and crosslinker may range from 1:100 to 100:1. The molar ratio between the group activator and the crosslinker may range from 20:1 to 1: 20. The molar ratio between the group activator and the crosslinker may be 3:1 or higher. The molar ratio between the group activator and the crosslinker may be 1:3 or lower. It is understood that as long as the amount of crosslinker in the reaction mixture comprising the crosslinker and the group activator is sufficient to substantially crosslink the copolymer, such a ratio may be selected in this embodiment.

In one embodiment, prior to the crosslinking step the copolymer is reacted with a group activator. The amount of group activator is such that at least 2 reactive groups, preferably at least 3 reactive groups remain on average per copolymer for the subsequent crosslinking step.

Reaction conditions for reacting a group activator (prior, during or after crosslinking) with a copolymer may be selected that are highly similar to the reaction conditions for performing a crosslinking step.

The degree of crosslinking can thus be controlled, as well as the level of ion exchange groups in the crosslinked copolymer. The group activation reaction may be performed with the aid of solvents (e.g. alcohols or non-protic solvents), reagents (e.g. non-nucleophilic bases such as diisopropylethyl amine), activating agents (e.g. carbodiimide agents in reactions between acid and amine reactive groups) and/or catalysts (e.g. metal catalysts in reactions between alcohols and isocyanates). The reaction conditions may also be varied with regard to temperature, performing the reaction under inert gases such as argon or nitrogen, and/or using a light source as reaction initiator or stimulus.

The reactive group of the group activator may react with reactive groups present in the copolymer. Thus, when one of the reactive groups of a group activator molecule reacts with a reactive group on a copolymer molecule, the group activator molecule may be covalently bound with the copolymer molecule. Hence, the ion exchange group is formed

without crosslinking of the copolymer. The reactive groups of the group activator and copolymer may be complementary, such that group activators may not react with each other and may not react with the crosslinker, while copolymers may not react with each other, such that a group activator preferably reacts exclusively with a copolymer.

The group activator or the copolymer may comprise an ion exchange group, such that when the copolymer and the group activator are reacted a copolymer with ion exchange groups is formed. In a particular embodiment, a copolymer may have reactive groups that are ion exchange groups such as e.g. carboxylate or sulfonate groups, which groups may be converted to amide or sulfonamide linkages by reaction with amine groups in a group activator.

As long as a group activator and a copolymer may have complementary reactive groups, i.e. they can react with each other forming active ion exchange group, such a group activator and copolymer may be used. Thus, the complementary reactive groups in the group activator and the copolymer may be any combination of two reactive groups that effectively leads to a covalent bond formation between the group activator and copolymer. For example, one may have alcohol reactive groups, while the other may have carboxylic acid, carboxylic (activated) ester or anhydride reactive groups to enable the formation of ester linkages; the other may also have isocyanate reactive groups thus forming urethane linkages; the other may also have halide, tosylate, mesylate or triflate reactive groups thus forming ether linkages. Furthermore, one of the reaction components (polymer or group activator) may comprise primary amine or secondary amine reactive groups, while the other reaction component may have isocyanate reactive groups (to form urea linkages), carboxylic acid, carboxylic (activated) ester or (cyclic) anhydride reactive groups (to form amide linkages), ethylenenically monounsaturated reactive groups such as (meth) acrylates, (meth) acryl amides or vinyl derived groups (to form amine linkages in Michael- type of additions), epoxide reactive groups (to form an amine alcohol linkage), sulfonate of activated sulfonate reactive groups (to form sulfon amide linkages), or halide, tosylate, mesylate or triflate reactive groups (to form secondary or tertiary amine linkages) . Alternatively, one may comprise tertiary amine, pyridine or tertiary phosphine reactive groups, while the other may have halide, tosylate, mesylate or triflate reactive groups, upon group activation, quarternary ammonium, pyridinium or quarternary phosphonium linkages may be formed.

Accordingly, examples of group activators are monoamines, monohalides, monotosylates, monomesylates, alcohols, carboxylic acids, activated esters, monovinyl compounds, monoisocyanates and epoxides. Group activators that may be preferred are monoamines, monopyridines and monohalides, more preferred may be monoamines and monohalides, most preferred may be monohalides. For amine groups in the group activator, either primary or secondary amines can be used, which are reactive towards e.g. carboxylic acids and its derivatives or towards sulfonates and its derivatives. Tertiary amines can also be used and are preferred as these can generate ion exchange groups upon reaction with e.g. monohalides. In case halides are used, the more reactive halides are preferred, such as activated halides, bromides and iodides. Group activator molecules are for example primary amines, secondary amines such as methyl alkaneamines, tertiary amines such as tetramethyl alkaneamines, pyridines, monohalides such as alkyl or benzyl halides such as methyl halides, and/or ethyl halides.

In another embodiment of the method for preparing the copolymer with ion exchange groups, an ion exchange group is formed during the group activation step. Preferably, the copolymer and group activator comprise reactive groups that are capable of reacting with each other forming a covalent bond and an ion exchange group. The ion exchange group that is formed may be a cation exchange group or an anion exchange group.

When the ion exchange group is an anion exchange group, the reactive group of the polymer is preferably a tertiary amine, a pyridine, a guanidine and/or a phosphine group and the reactive group of the group activator may be a halide, tosylate, mesylate or triflate group, or the reactive group of the group activator is preferably a tertiary amine, a pyridine, a guanidine and/or a phosphine group and the reactive group of the copolymer may be a halide, tosylate, mesylate or triflate group. Thus quarternary ammonium, pyridinium, guanidinium or phosphonium anion exchange groups are created, respectively, when the copolymer and the group activator have reacted.

The reaction of the copolymer with the group activator may result in the formation of an ion exchange group, In addition, or alternatively, the copolymer and/or the group activator may already comprise at least one ion exchange group. With comprising ion exchange groups according to the invention it is meant that the ion exchange groups are covalently bound to the copolymer, group activator, crosslinker and/or crosslinked polymer. Alternatively, ion exchange groups may also be covalenty bound to a crosslinked polymer already prepared, forming a crosslinked polymer with ion exchange groups. As long as a crosslinked polymer with ion exchange groups is prepared or provided, such a crosslinked polymer with ion exchange groups may be used in the invention.

In a further embodiment, the group activator and/or polymer may comprise hydrophilic groups and/or hydrophobic groups. Providing such groups may affect the reaction conditions (e.g. solvents, reaction kinetics) during the crosslinking step and/or the properties of the crosslinked copolymer with ion exchange groups.

## The ion exchange groups

The ion exchange groups may be dissociable depending on the pH, but are preferably not pH-dependent, i.e. they do not change their charge upon pH-changes. Alternatively, the ion exchange groups may not be pH-dependent

over a broad pH-range, for example from pH 5 to 9, preferably from 3 to 11, more preferably from 2 to 12, most preferably from 1 to 13 or even beyond. Ion exchange groups may either be anion exchange groups or cation exchange groups.

Anion exchange groups are positively charged and may be based on nitrogen or phosphor atoms that preferably do not bear any hydrogen atoms. Examples of anion exchange groups are quaternary ammonium charges ($NR_4$), quaternary phosphonium charges ($PR_4$), guanidinium charges, pyridinium charges or charges formed from nitrogen containing heterocycles other than pyridine, such as for example imidazoles, triazoles or oxazoles. Most preferred may be pyridinium charges. The so-called strongly basic ion exchange groups (e.g. quaternary ammonium groups) are preferred over weakly basic groups (e.g. secondary or tertiary amines).

## The preparation of the copolymer

The copolymers may be prepared by various methods known in the art and are usually prepared by step-growth methods or by chain-growth methods. In a typical step-growth method an $AB_x$ branching monomer is polycondensed (dependent on the availability of suitable monomers; usually x=2, where x represents the number of functional groups B in the monomer), where the functional groups A react with B, and not with other A groups. The B groups do also not react with each other, and have an equal or similar reactivity towards A. Side reactions are prevented or are insignificant. The result is a polymer with a high functionality in B-groups. A lot of variations and modifications of a step-growth method are possible, and have been developed. For example, in addition to the $AB_x$ monomer, a multifunctional $B_y$ monomer (where y represents the number of functional groups B in the monomer), an AB monomer, or a monomer with only one A-group may be used. In other frequently used methods, the multifunctional monomers $A_2$ and $B_y$ are combined to produce a polymer material. Here, in principle, crosslinking may occur, but by controlling the conversion of the polymerization, undesired gelation may be prevented. Another way to circumvent crosslinking in the reaction between $A_2$ and $B_y$ monomers is that one of the B-groups has a much higher reactivity towards the A-group (and therefore is in fact a C-group), so that an $AB_x$ monomer is formed in-situ. Step-growth methods have also been described by the way in which the monomer is used or applied (see Gao and Yan, Prog.Polym.Sci., 29, 2004), discriminating between single monomer methodologies (SMM), double monomer methodologies (DMM) and couple-monomer methodologies (CMM), where in the latter case the $AB_x$ branching monomer is formed in situ.

Step- growth methods are usually polycondensation reactions, leading to polyesters, polyamides, polycarbonates, polyureas, polyurethanes, polyethers or polyarylenes), but Michael- type of additions, i.e. additions where a primary or secondary amine adds to a double bond (leading to polyamines), or additions of alcohols to isocyanates (leading to polyurethanes) are also possible.

Chain growth methods that may also be used to prepare polymers are radical addition polymerization reactions, ring opening reactions, or anionic or cationic (living) polymerizations. The radical addition polymerizations may be free radical polymerizations, or controlled radical polymerizations that are known in the art, such as nitroxide-mediated radical polymerization (NMRP), atom-transfer radical polymerization (ATRP) or reversible addition-fragmentation chain transfer polymerizations (RAFT). Other controlled chain-growth processes that may be used are group-transfer polymerizations, ruthenium-catalyzed co-ordinative polymerizations or ring opening metathesis polymerzations (ROMP).

A chain-growth method to prepare polymers may be according to the so-called self-condensing vinyl polymerization (SCVP), wherein an AB* branching monomer, in which A is a vinylic group that is capable of chain-growth vinyl-polymerization and B* is a group that potentially generates initiating sites for this vinyl-polymerization, providing the third direction in which the polymer chain may grow. The AB* branching monomer may be combined with an A monomer, so that not every monomeric unit is a potential branching unit. Similarly, in the self-condensing ring-opening polymerization (SCROP), that is also called ring-opening multibranching polymerization (ROMBP), an AB* monomer is used, where A is a heterocyclic ring capable of ring-opening polymerization, and B* is an initiating group for this ring opening polymerization. The AB* monomer may be combined with a cyclic A monomer, so that not every monomeric unit is a potential branching unit. Glycidol is an example of an AB* monomer that is suitable for use in SCROP (or ROMBP).

According to the above, chain growth methods may involve the use of either vinylic monomers (leading to polyvinyl type of polymers) and/or cyclic monomers (typically leading to polyethers or polyesters) . Vinylic monomers can be (meth) acrylates, (meth) acryl amides, vinyl ethers, vinyl esters or vinyl aryl monomers. Combinations of these type of vinyl monomers may be suitable as well. Examples of cyclic monomers are epoxides, oxetanes, caprolactones or urethanes.

## Preparing a copolymer by an addition polymerization reaction

The methods for preparation of copolymers described above are methods describing general ways to prepare copolymer, and are not limited thereto. It may be of interest to provide for a versatile method in which the copolymer is synthesized in one synthetic step, after which the copolymer can be used for the preparation of the crosslinked polymer with ion exchange groups, without having to do resort to post-modification reaction step(s) on the polymer.

In one aspect of the invention, a copolymer is prepared by a method, comprising the steps of:

- providing a first monomer with a functional group selected from the pyridine derivatives,
- providing a second monomer selected from the benzene derivatives
- optionally providing one or more branching monomer,
- providing an initiator, preferably a free radical initiator,
- optionally, providing a chain transfer agent, and
- reacting the optional branching monomer (s), the optional co- monomer (s), the initiator and the optional chain transfer reactant to form a copolymer.

In one embodiment, the reaction step may involve an addition polymerization reaction or, preferably, a free-radical polymerization reaction. In this method, the chemistry of the reactants (i.e. co- monomer, initiator, (optional) branching monomor and/or (optional) chain transfer agent) and the reaction conditions may be selected such that crosslinking reactions may be prevented between copolymer molecules that are being formed during the reacting step (i.e. preventing gelation or solidification) .

In a preferred embodiment, the branching monomer comprises at least two vinyl groups, and wherein the co-monomer comprises one vinyl, where the vinyl groups are suitable for addition polymerization. Preferably, the product is a poly (4 vinyl pyridine- co- styrene) .

The preparation methods and reactants (e.g. branching monomer, co- monomer, initiator and/or chain transfer agent) described below are versatile in the sense that the copolymer may be prepared from readily available monomers and reactants, and that it can be tailored with respect to its properties by simply varying the used amounts of the branching monomer, the co- monomer (s), the initiator and the chain transfer agent. The extent of branching of the copolymer may be controlled by adjusting the amount of branching monomer in the polymerization reaction, while the use of the types and amounts of co- monomers may determine the type and amount of ion exchange groups and/or reactive groups in the polymer. Care may be taken to select a ratio between the chain transfer agent and the branching monomer such that gelation is prevented during the polymerization reaction, while still generating a copolymer of a substantial molecular weight, e.g. with copolymer molecules with a number average molecular weight (Mn) in the range of 250 Dalton to 100.000 Dalton (see for example O'Brien, Polymer, 41, 2000, 6027- 6031) . All branched monomers, co- monomers, initiators and/or chain transfer agents may comprise groups, or may transfer groups, such that the copolymer formed may comprise these groups.

When co-monomers are combined, for instance to provide for different chemistries in the copolymer, e.g. see example Reaction scheme 1 wherein 4-VP provides for a pyridine and HEMA/MMA provides for hydrophilic groups, one co-monomer may have a high reactivity with the CTA. Because of this high reactivity, a side product may be formed when the CTA and this co-monomer react. When this is the case, more of the CTA and more the this co-monomer may be used to compensate for the loss of reactants in the side product. For example, the co-monomer 4-vinyl pyridine can form readily a thioether side product with a linear primary thiol CTA. For instance, the amounts of CTA and/or co-monomer may be increased in the reaction mixture, whereas the amount of CTA and/or co-monomer incorporated is similar (see Table 1 and Table 2, compare e.g. 12A with 21).

In the reaction mixture, the amount of co- monomer (s) used is preferably in the range of 40 mol/mol% to 98 mol/mol%, the amount of branching monomer (s) and/or CTA is preferably from 2 mol/mol% to 50 mol/mol%. The initiator can be used in amounts varying from 0.01 mol/mol% to about 5 mol/mol%, relative to the amount of co- monomer (s), branching monomer (s) and CTA reactants. When higher molar percentages of initiator are used, the application of inhibitor additives or retarding agents (e.g. benzoyliminoacetate) may be considered. However, inhibitors or retardants may be avoided when about 1 mol/mol% of initiator is used, .

The radical polymerization reaction may be performed using reaction conditions known to the skilled person, selecting a solvent (e.g. toluene or ethanol), concentration of reactants and monomers (i.e. solids), temperature and addition method of monomers, reactants and/or solvent as are known in the art for polymerization reactions. Preferably, the reaction is performed in alcohols such as ethanol, with concentrations ranging between 3 w/w % and 30 w/w % in solids, more preferably between 10 w/w % and 25 w/w %,, at temperatures between 60°C-90 °C,. Preferably, all monomers, reactants and solvents are premixed before the start of the reaction. Prior to a radical polymerization, the reaction mixture is preferably freed of oxygen, for example by purging it with an inert gas such as nitrogen.

The copolymer may next be isolated. The copolymer may for instance be isolated by precipitation or stirring in a non-solvent for the copolymer. For this purpose the solvent in which the reaction was carried out may first be evaporated, prior to addition of the non-solvent. In the precipitation step by-products or less-preferred product fractions of low molecular weight may be removed.

Alternatively, the reaction mixture comprising the copolymer may also be directly used for the crosslinking reaction, forming a crosslinked copolymer with ion exchange groups.

### The optional branching monomer

An branching monomer may be a molecule comprising two vinyl groups (i.e. an ethylenenically diunsaturated monomer). The branching monomer may also comprise more than two vinyl groups. These vinyl groups can be polymerized in an addition polymerization reaction an may be provided in relatively low amount compared to the first monomer with a functional group selected from the pyridine derivatives and the second monomer selected from the benzene derivatives to provided some amount of branching in the polymer. Many of such molecules are readily available, or may be prepared by reacting any di- or multifunctional molecule with a suitably reactive vinylic reactant. Examples include di- or multivinyl esters, di- or multivinyl amides, di- or multivinyl aryl compounds (including those with heterocyclic aryl groups), and di- or multivinyl alkyl/aryl ethers. The branching monomer may be hydrophilic or hydrophobic (but hydrophobic polysiloxane chains may be less preferred); The branching monomer can be either uncharged or negatively or positively charged. The branching monomer may be a single molecule, an oligomeric molecule or a polymeric molecule. The branching monomer may also comprise a mixture of different branching monomers. compound. The molecular weight of a branching monomer may be lower than 950 Dalton. The branching monomer may preferably be uncharged, and preferably a single compound.

Branching monomers include, but are not limited thereto, divinyl aryl monomers such as divinyl benzene (DVB) ; (meth) acrylate diesters such as alkylene di (meth) acrylates such as ethylene glycol di (meth) acrylate, propylene glycol di (meth) acrylate, 1, 4- butylene glycol di (meth) acrylate; oligo alkylene glycol di (meth) acrylates such as e.g. tetraethyleneglycol di (meth) acrylate, poly (ethyleneglycol) di (meth) acrylate, poly (propyleneglycol) di (meth) acrylate; divinyl (meth) acrylamides such as methylene bisacrylamide; divinyl ethers such as poly (ethyleneglycol) divinyl ether; and tetra- or tri- (meth) acrylate esters such as pentaerythritol tetra (meth) acrylate, trimethylolpropane tri (meth) acrylate or glucose di- to penta (meth) acrylate. Preferred branching monomers may be divinyl benzene, $\alpha$, $\omega$- alkylene di (meth) acrylates or divinyl (meth) acrylamides, most preferred may be $\alpha$, $\omega$- alkylene di (meth) acrylates such as ethylene glycol di (meth) acrylate and 1, 4- butylene glycol di (meth) acrylate or divinyl (meth) acrylamides, such as methylene bisacrylamide.

In another embodiment, the branching monomer is a di (meth) acrylate, or a bisacrylamide, more preferably 1, 4- butanediol dimethacrylate or methylene bisacrylamide.

### The initiator and the chain transfer agent

The initiator is a molecule that can initiate a polymerization reaction. In case the polymerization reaction is a (free)- radical polymerization reaction, the initiator may be a (free)- radical initiator which may be any molecule known to initiate such a reaction, such as e.g. azo- containing molecules, peroxides, persulfates, redox initiators, benzyl ketones. Such initiators may be activated via thermal, photolytic or chemical means. Examples of (free)- radical initiators are 2, 2'- azobisisobutyronitrile (AIBN), azobis (4- cyanovaleric acid), benzoyl peroxide, cumylperoxide, 1- hydroxycyclohexyl phenyl ketone and hydrogenperoxide/ ascorbic acid. The so- called iniferters may also be considered as initiators. AIBN may be preferred as (free)- radical initiator.

The chain transfer agent or reactant is a molecule that can control, limit and reduce the molecular weight during radical or free- radical polymerization via a chain transfer mechanism, as is known in the art. For example, a chain transfer agent in a radical polymerization reaction can react with the group of the polymer comprising the radical, such that the radical is transferred to the chain transfer agent. The result is that the chain transfer agent comprises the radical, and the polymerization of the group of the polymer that previously comprised the radical has stopped. The use of a chain transfer agent may prevent that the polymerization reaction will results in crosslinking reactions and gel formation. The chain transfer agent in a radical polymerization reaction may be any thiol- containing molecule and can be mono- or multifunctional. Examples of suitable thiols are linear or branched C2- C18 alkyl thiols such as dodecane 1- thiol, thioglycolic acid, thioglycerol, cysteine and cysteamine, 2- mercaptoethanol, thioglycerol, dithiothreitol (DTT) and ethylene glycol mono- (and di- ) thio glycollate. Thiols may in addition bear reactive and/or ion exhange groups, such as carboxylic acids, amines or alcohols. Apart from thiols, other agents that can stabilize a radical and/or that are known to limit the molecular weight in a free- radical addition polymerization may also be considered. For example, hindered alcohols, organic complexes of cobalt are known as chain transfer catalysts, such as bis (borondifluorodimethyl- glyoximate) (CoBF) or cobalt oximes, reversible addition fragmentation transfer (RAFT) agents such as xanthates, dithioesters and dithiocarbonates, or alkyl halides. A preferred chain transfer agent is a thiol, preferably an organic thiol, more preferably an organic linear or branched C6- C20 alkyl thiol.

### An ion exchange membrane comprising the crosslinked copolymer ion exchange groups

A crosslinked copolymer with ion exchange groups obtainable or obtained by the methods as described herein may be provided. Such a crosslinked copolymer with ion exchange groups may be in the form of a sheet. The invention

also provides for an ion exchange membrane comprising the crosslinked copolymer containing ion exchange groups, that preferably is prepared as a sheet.

The crosslinked polymer may have gel like or solid like properties. The crosslinking reaction may be performed in a coating or a film, such that a sheet of crosslinked copolymer is formed. The reactive film may be prepared by any processing technique feasible, such as for example by spraying a solution that contains both the copolymer and the crosslinker onto a surface, or by applying such a solution onto a substrate by any coating technique, e.g. by a so-called dr. Blade, roll to roll, knife over edge or slot dye coating technique.

The crosslinking reaction may be performed directly onto the surface or substrate of choice, for example onto a specific support layer or onto an electrode. By crosslinking the copolymer on the electrode the strength of the membrane and the electrode may be increased. The increased strength may be used to make the electrode and or the membrane thinner. Furthermore, stack assembly may become easier because less layers need to be stacked during assembly because two layers are already integrated with each other. The crosslinking reaction on the electrode may assure that there is intimate contact between the electrode and the membrane. This way air and/or water pockets between the electrode and the membrane may be circumvented. The crosslinker and copolymer may be provided directly onto the electrode, whereby the membrane network is formed in situ. The crosslinker and copolymer may be partially penetrating into the electrode to enhance intimate contact between membrane and electrode. This may be done by impregnating the electrode with a solvent, e.g. water and casting the membrane casting solution onto the electrode, whereby the castng solution is capable of wetting the electrode surface (containing the electrode solvent, e.g. water). During cross linking the membrane onto the electrode, the membrane could even be partially crosslinked with the electrode, which would lead to a stronger bond between electrode and membrane than when the bond is only by a physical attraction force. A strong bond between membrane and electrode may help in reducing a potential swelling of the membrane along the electrode surface, once the membrane is brought in contact with water. In addition, the strong bond may also help in preventing that the membrane becomes loose and/or delaminated from the electrode surface.

In a further embodiment the crosslinking may also be done partially with the spacer that is applied against the membrane. By doing the crosslinking onto the spacer, there will be intimate contact between the membrane and the spacer and the spacer and membrane layers will be integrated into one layer, which will make stack assembly easier..

Alternatively, the crosslinking reaction may also be performed to prepare small sphere- like shaped crosslinked copolymer particles (e.g. microspheres), for example by performing the crosslinking in small droplets, which may be used to prepare e.g. a paste, such that the crosslinked copolymers may be applied to irregular surfaces or shapes.

The crosslinking step may also at first instance be done partially in a reactor, and may subsequently be transferred to the object, substrate or surface of choice, where the reaction may be completed. Since during the crosslinking step the viscosity of the reaction mixture may increase, due to the crosslinks that are formed, the properties of the reaction mixture may change from a liquid to a more viscous, paste like mixture which may make it convenient to apply the reaction mixture to a surface, or a mold, which may even have an irregular surface. Hence, it may be advantageous to transfer the reaction mixture during the reaction to an object, substrate or surface of choice, where the reaction will be completed.

In another aspect of the invention, an ion exchange membrane is provided which comprises sheets of crosslinked copolymer with ion exchange groups, wherein the thickness of the sheets of crosslinked copolymer with ion exchange groups is preferably less than 200 micrometer, more preferably less than 100 micrometer, and most preferably less than 60 micrometer or even less than 30 micrometer

The concentration of the ion exchange groups, either cationic or anionic, in the crosslinked copolymer with ion exchange groups is preferably between 0.2 and 6 mmol per gram, preferably between 0.8 and 5 mmol per gram, more preferably between 1.4 and 4 mmol per gram, even more preferably between 2 and 3 mmol per gram and most preferably between 2.2 and 2.7 mmol per gram . These numbers refer to a dry crosslinked copolymer with ion exchange groups. Preferably, the crosslinked copolymer with ion exchange groups comprises between 25% and 95%, more preferably, between 40% and 85%, and most preferably between 55% and 80% by weight of the copolymer. The concentrations of ion exchange groups in mmol/g of dry crosslinked copolymer with ion exchange groups, and percentages by weight of copolymer in the dry crosslinked copolymer with ion exchange groups may e.g. be calculated from the amounts of copolymer and that have been used in the preparation of the crosslinked copolymer membrane material.

Furthermore, the crosslinked copolymer with ion exchange groups material may comprise additional hydrophilic groups, such as for example alcohol or amide groups, and/or additional hydrophobic groups, such as for example $C_8$ or higher alkyl or alkylene groups, where these hydrophilic and/or hydrophobic groups may originate from the and/or from the copolymer. In this way, the crosslinked copolymer with ion exchange groups may be more compatible with water and/or may improve the electrical conductive properties of the crosslinked copolymer with ion exchange groups and/or may improve the performance of the membrane material.

The (sheets of) crosslinked copolymer with ion exchange groups, that may be used for ion exchange membranes, may have little or no curling or delamination when after preparation they are brought in contact with water and also at the same time may show little swelling. Furthermore, advantageous perm selectivities may be obtained with crosslinked

copolymers with ion exchange groups. As is described in the examples, for instance, permselectivities higher than 90% may be obtained with sheets in the range of 40 micrometer (see example 17). Permselectivity or permeability selectivity, is defined as the percentage of cations or anions, of the total amount of ions that may be taken up by a membrane, in this case a membrane comprising the crosslinked copolymers with ion exchange groups. When a membrane has a permselectivity of 100% for anions, this means that 100% of the ions may be taken up by the membrane are anions. When the permselectivity is reduced e.g. by 5% to a permselectivity of 95%, this means that 95% of the ions that are taken up by the membrane are anions, and 5% are cations. Please note that for ion exchange membranes, especially for those applied in FTCs, every percent increase in permselectivity may be very valuable, with 100% being the maximum selectivity achievable. Also, a low resistances as low as 5 ohm*cm2, or even as low as 1.5 ohm*cm2 may be important for the prepared sheets of crosslinked copolymers with ion exchange groups.

## Examples

### Experimental details

All solvents were of AR quality if not stated otherwise and were purchased from commercial sources (Biosolve or Acros) . Petroleum ether (boiling point range 60- 80 °C) was purchased from ABCR. Deuterated solvents were purchased from Cambridge Isotope Laboratories and were dried over molsieves. The monomers 2- hydroxyethyl methacrylate (HEMA) (97%), methyl methacrylate (MMA) (99%) and the branching monomer divinylbenzene (DVB) (70- 85%) were purchased from Aldrich. DVB consists of a mixture of 1, 4- divinylbenzene and 1, 3- divinylbenzene and contains significant amounts of ethylvinylbenzene and diethylbenzene. The chain transfer agent 1- dodecane thiol (99%), the monomers 4- vinyl pyridine (4- VP) (95%) and styrene (99.5 %), the initiator 2, 2'- azo- bis (2- methylpropionitrile) (AIBN) (98%) were purchased from Acros. $^1H$- NMR spectra were recorded in $CDCl_3$ on a Varian 400 MHz or 200 MHz NMR spectrometer, where $^1H$- NMR chemical shifts are given in ppm, and were determined using tetramethylsilane (TMS) as internal standard (0 ppm) . Infrared spectra of samples were recorded on a Perkin Elmer Spectrum One 1600 ATR FT- IR spectrometer. Wavenumbers are given in $cm^{-1}$. GPC (or SEC) chromatograms of the polymers were measured using 10 mM of LiBr in DMF as eluent, applying a 1 mL/min eluent flowrate, a sample concentration of 2 mg/mL in 10 mM of LiBr DMF and an injection volume of 20 microL. A Polymer Laboratories PL- GPC50 Plus Integrated GPC system was used, equipped with a Polymer Standards Service (PSS) Gram analytical linear M column (dimensions 8 × 300 mm, particle- size 10 micro- m, mass range: 500- 1000000 Da) that was operated at 50 °C and applying refractive index (RI) detection. Calibration was performed with polyethyleneoxide reference standards. Elemental analysis was performed on a Perkin Elmer 2400 machine, where elemental contents are given in weight percentages. DSC was performed on a TA Q2000 instrument, where monitored samples are kept under a nitrogen atmosphere. Glass transition temperatures (Tg) are given as observed during the second heating run using a heating rate of 20 °C/min.

### The preparation of the copolymers

Copolymers were synthesized in addition polymerization reactions. Methacrylate/4-vinyl pyridine based copolymers (see Scheme 1) as well as styrene/4-vinyl pyridine based copolymers (see Scheme 2) were prepared. Also a styrene/4-vinyl pyridine hyperbranched copolymer with divinyl benzene as branching monomer was prepared (see Scheme 2).

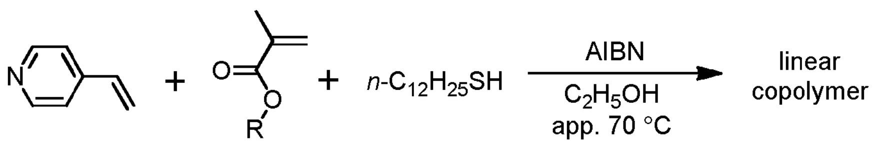


4-VP HEMA/MMA

Scheme 1. The synthesis of methacrylate/4-vinylpyridine linear copolymers. R = $C_2H_4OH$ (HEMA) or R = $CH_3$ (MMA). See examples 1 and 2 for details.

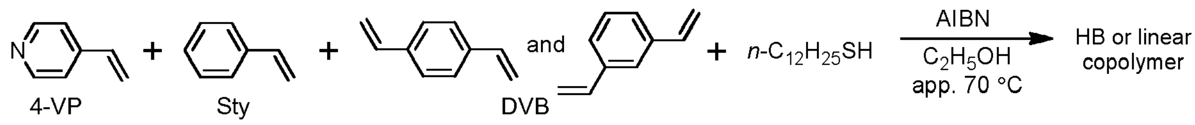


Scheme 2. The synthesis of styrene/4-vinylpyridine linear (no DVB used) and hyperbranched copolymers. See examples 3 and 4 for details.

For the methacrylate based linear polymers with pyridine groups (Scheme 1), 2-hydroxyethyl methacrylate (HEMA) or methyl methacrylate (MMA) were used as comonomers. These monomers differ in polarity, thus enabling control of the polarity of the copolymer. Besides methacrylates, styrene was selected as comonomer with 4-VP, and the introduction of divinylbenzene enables the synthesis of hyperbranched copolymers. Similar reaction conditions were used for all synthetic examples, with 1 molar-% of AIBN radical initiator with respect to the total amount of reactive vinylic groups in the polymerization. Ethanol was used as solvent. Dodecane thiol was used as chain transfer agent in all examples, which may result in the formation of a thioether side product, see also A.R. Katrizky et al., J. Org. Chem., 1986, 51, 4914. Temperatures were around 70 °C. Polymers were purified by washing with heptane or petroleum ether.

**Example 1: linear copolymer 10B**

4- Vinyl pyridine (7.91 g, 71.43 mmol), 2- hydroxyethyl methacrylate (3.57 ml, 28.57 mmol), n- dodecane thiol (10.33 ml, 42.86 mmol) and AIBN (167 mg, 1 mmol) were dissolved in ethanol (67 ml) in a 3- neck 250 ml round- bottom flask under stirring. The beige, clear solution was purged with argon for 1 h while stirring. A reflux condenser was fitted and the reaction mixture was then stirred and heated at an oil bath temperature of 75 °C for 15 h, and was kept under an argon atmosphere. The solvent was evaporated *in vacuo* and the orange residual syrup redissolved into ethanol (15 ml) and subsequently precipitated into an ice- cold mixture of heptane (200 ml) and diisopropyl ether (100 ml) during which a beige slurry formed. The slurry was filtered over a glass filter and the residue was washed twice with an ice-cold mixture of heptane (33 ml) and diisopropyl ether (17 ml) . Overnight drying of the residue in vacuum yielded the reference linear copolymer 10B as a light- yellow solid (7.19 g, 36 %) . $^1$H- NMR ($CDCl_3$ and $CD_3OD$) : $\delta$ = 8.42 (pyridine, broad peak (bp) ), 7.08 (pyridine, bp), 4.08 (ester, bp), 3.78 (ester/ alcohol, bp), 3.53 (ester/ alcohol, bp), 2.5- 0.4 (multiple signals, bp), 1.25 (alkyl tail $CH_2$- groups), 0.88 ppm (triplet (t), $^3J$ (H, H) = 6.3 Hz, alkyl tail $CH_3$- group) . FT- IR (ATR) : $v$ (cm-$^1$) = 3233, 2925, 2854, 1721, 1598, 1558, 1454, 1417, 1386, 1220, 1183, 1145, 1083, 1070, 1026, 1003, 994, 897, 820, 755; GPC (DMF- LiBr) : Mn = 0.2 kg/mol, Mw = 0.3 kg/mol, PDI = 1.7; Elemental analysis: C 67.23, H 7.88, N 5.58. Number of pyridine groups as derived from $^1$H NMR data: 4.2 mol/kg linear copolymer. Tg = 39 °C.

**Example 2: linear copolymer 22A**

4- Vinyl pyridine (11.88 g, 107.1 mmol), methyl methacrylate (4.65 ml, 42.9 mmol), dodecane thiol (15.5 ml, 64.3 mmol) and AIBN (249 mg, 1.5 mmol) were dissolved in ethanol (100 ml) in a 3- neck 250 ml round- bottom flask under stirring. The beige, clear solution was purged with argon for 1 h while stirring. A reflux condenser was fitted and the reaction mixture was heated at an oil bath temperature of 70 °C under argon and stirring for 16 h. The solvent was evaporated *in vacuo* and the orange residual syrup mixed with heptane (100 ml) . This mixture was heated to reflux under stirring to give a beige emulsion. After 0.5 h, the emulsion was allowed to reach room temperature during which time the orange material settled and an orange, clear supernatant formed. The latter was decanted and the residue was mixed with heptane (100 ml) and subsequently heated to 80 °C. Stirring of the viscous mixture was performed for 10 minutes after which the mixture was allowed to reach room temperature. An almost colorless, turbid supernatant formed which was decanted and the beige residue was collected, dried under vacuum at room temperature and subsequently mixed with pentane (100 ml) to give a beige suspension upon grinding and stirring. The suspension was allowed to settle, so that a supernatant formed that was then decanted. The residue was collected and dried under vacuum at room temperature in the presence of KOH to give linear copolymer 22A as a beige powder (7.85 g, 27 %) . $^1$H- NMR ($CDCl_3$) : $\delta$ = 8.46 (pyridine, bp), 6.87 (pyridine, bp), 3.54, 3.35 and 2.91 (ester/ alcohol, bp), 2.5- 0.4 (multiple bp), 1.24 (alkyl tail $CH_2$), 0.86 ppm (t, $^3J$ (H, H) = 6.1 Hz, alkyl tail $CH_3$) ; FT- IR (ATR) : $v$ (cm-$^1$) = 3423, 3024, 2988, 2925, 2853, 1725, 1597, 1557, 1448, 1416, 1358, 1219, 1196, 1134, 1069, 993, 820, 754; GPC (DMF- LiBr) : Mn = 0.7 kg/mol, Mw = 1.5 kg/mol, PDI = 2.1; Elemental analysis: C 71.74, H 7.79, N 7.46. Number of pyridine groups as derived from $^1$H NMR data: 5.5 mol/kg linear copolymer. Tg = 41 °C.

**Example 3: linear copolymer 112**

4- Vinyl pyridine (6.79 g, 61.3 mmol), styrene (12.85 g, 123 mmol), dodecane thiol (0.160 g, 0.77 mmol) and AIBN (0.308 g, 1.84 mmol) were dissolved in ethanol (60 ml) in a 3- neck 100 ml round- bottom flask under stirring. The beige, clear solution was purged with argon for 2 h while stirring. A reflux condensor was fitted and the reaction mixture was heated at an oil bath temperature of 72 °C under argon and stirring for 26 h. The solvent was evaporated *in vacuo* and the orange, sticky residue was mixed with heptane (50 ml) in a 100 ml flask and heated at reflux for 2 hours under mechanical stirring. The mixture was allowed to reach room temperature and subsequently the heptane phase was decanted. The resulting beige, sticky residue was dissolved into chloroform (25 ml) and precipitated into well- stirred petroleum ether (250 ml) . The petroleum ether phase was decanted and the beige residue dried in a vacuum oven at 30 °C overnight yielding copolymer 112 as a beige, glassy powder (17.8 g, 94 %) . $^1$H- NMR ($CDCl_3$) : $\delta$ = 8.25 (pyridine, bp), 7.08 (styrene and pyridine, bp), 6.45 (styrene, bp), 2.1- 1.0 ppm (multiple bp) ; FT- IR (ATR) : $v$ (cm-$^1$) = 3061, 3025, 2921, 2851, 1946, 1870, 1596, 1557, 1493, 1452, 1414, 1373, 1328, 1219, 1182, 1155, 1068, 1028, 993, 907, 819, 756, 698; GPC (DMF- LiBr) : Mn = 3.5 kg/mol, Mw = 10 kg/mol, PDI = 2.9; Number of pyridine groups as derived from $^1$H NMR data: 3.5 mol/kg linear copolymer. The copolymer has a glass transition temperature between 60 and 80.Tg = 76 °C. The yield of the copolymer reaction was 94%.

**Example 4: Hyperbranched copolymer 116**

4- Vinyl pyridine (7.06 g, 63.8 mmol), styrene (13.21 g, 126 mmol), dodecane thiol (12.95 g, 62.7 mmol), divinylbenzene (0.945 g, 6.2 mmol) and AIBN (0.339 g, 2.0 mmol) were dissolved in ethanol (69 ml) in a 3- neck 250 ml round- bottom flask under stirring. The beige, clear solution was purged with argon for 1 h while stirring. A reflux condensor was fitted and the reaction mixture was heated at an oil bath temperature of 71 °C under argon and stirring for 25 h. The solvent was evaporated in *vacuo* and the brownish, sticky, viscous syrup was mixed with petroleum ether (150 ml) in a 250 ml flask after which immediately a beige, sticky precipitate formed. The petroleum ether phase was decanted and the beige, sticky residue was mixed with petroleum ether (100 ml) and heated at reflux (oil bath = 100 °C) for 1 hour. Manual stirring with a spatula was applied. The mixture was allowed to reach room temperature and subsequently the petroleum ether phase was decanted. The resulting beige, sticky residue was mixed with petroleum ether (100 ml) and heated at reflux (oil bath = 105 °C) for 1 hour. Manual stirring with a spatula was applied. The mixture was allowed to reach room temperature and subsequently the petroleum ether phase was decanted. The beige residue was dried in a vacuum oven at 60 °C overnight yielding copolymer 116 as a beige, glassy powder (6.2 g, 19 %) . $^1$H- NMR ($CDCl_3$) : $\delta$ = 8.24 (pyridine, bp), 7.08 (styrene and pyridine, bp), 6.50 (styrene, bp), 2.7- 1.0 (multiple bp), 1.26 (alkyl tail $CH_2$), 0.88 ppm (triplet (t), $^3J$ (H, H) = 6.2 Hz, alkyl tail $CH_3$- group) ; FT- IR (ATR) : $v$ (cm-$^1$) = 3060, 3025, 2922, 2852, 1946, 1873, 1804, 1596, 1557, 1492, 1452, 1414, 1369, 1328, 1219, 1181, 1155, 1068, 1023, 993, 907, 820, 757, 697; GPC (DMF- LiBr) : Mn = 1.1 kg/mol, Mw = 7.3 kg/mol, PDI = 6.8; Number of pyridine groups as derived from $^1$H NMR data: 2.4 mol/kg hyperbranched copolymer. Tg = 67 °C. The yield of the copolymer reaction was 19%.

The relative molar amounts of the quaternizable monomer 4-vinyl pyridine, the comonomer and reactants that were used in Examples 1-4 are compiled in Table 1. Table 1 also contains the molar composition of the product copolymers, which was determined by $^1$H-NMR spectroscopy.

Table 1. Applied molar compositions of the reaction mixtures and molar compositions of the isolated copolymers.

| Example | Entry | Applied molar ratio of the monomers in the reaction mixture | | | | | |
|---|---|---|---|---|---|---|---|
| | | 4-VP | HEMA | MMA | styrene | DVB | dodecanethiol |
| 1 | 10B | 25 | 10 | - | - | - | 15 |
| 2 | 22A | 25 | - | 10 | - | - | 15 |
| 3 | 112 | 10 | - | - | 20 | - | 0.12 |
| 4 | 116 | 10 | - | - | 20 | 1 | 10 |
| | | Molar ratio of the monomeric units in the copolymers | | | | | |
| 1 | 10B | 10 | 6.7 | - | - | - | 2.1 |
| 2 | 22A | 10 | - | 4.8 | - | - | 1.4 |
| 3 | 112 | 10 | - | - | 17 | - | 0 |

(continued)

| Example | Entry | Applied molar ratio of the monomers in the reaction mixture | | | | | |
|---|---|---|---|---|---|---|---|
| | | 4-VP | HEMA | MMA | styrene | DVB | dodecanethiol |
| 4 | 116 | 10 | - | - | 25 | ? | 2.7 |
| Note: The amount of DVB in polymer 116 could not be derived from its $^1$H-NMR data. The amount of AIBN was always 1 mol-% compared to vinyl groups, note that DVB possesses two vinyl groups. Abbreviations are explained in Schemes 1 and 2. | | | | | | | |

**Membrane preparation**

Poly (4- vinyl pyridine- co- styrene) linear copolymer 112 from example 3 was received as a dry powder. In used polymer ratio between 4- vinyl pyridine and styrene was 1: 1.63. Copolymer was dissolved in N- butyl acetate Sigma- Aldrich to obtain 45% (by weight) solution. Membranes can be crosslinked by using dihalides (alkyl, alkenyl, alkynyl and aryl dihalides) .

In our investigation P(4-VPcS) was tested with 1.6-diiodohexane, 1.5-dibromopentane, 1.6-dibromohexane and 1.10-dibromodecane. To activate ion exchange groups without crosslinking monohalides can be used. For pilot experiments we choose 1.6 diiodohexane. Amount of 1.6-diiodohexane (98% stabilized with copper, Alfa Aesar) was added in order to achieve 100% crosslinking, solution was mixed for 6 minutes after the crosslinker was added. Membranes were casted on a glass plate. For full scale experiments they were casted with a thickness set on applicator to 120μm. Casting was performed by automatic applicator (Zehnter ZAA 2300, speed set to 1 mm/s). Casted films were dried in the oven for 24h at approximately 50°C then soaked off the glass plates, put into 0.05M KCl solution for 4 days (to let membranes swell and exchange counter-ions). Next step was to cut membranes to proper dimension (16x16cm) in order to put them in the CapDI system. Subsequently membranes were tested in full scale stack at CC for 3 days. Before and after constant current test small samples of the membranes were taken to characterize them (resistance, permselectivity, swelling and IEC).

**Calculations of amount of crosslinker and theoretical IEC**

$$Amount\ of\ crosslinker = E = \frac{A * \frac{B}{100} * C * \frac{D}{200} * Mw1}{1000}$$

$$IEC_{theoretical} = \frac{A * B * C}{A * B + E - F} = 2.62\ \frac{mmol}{g}$$

Where:

A= Amount of polymer solution [g];
B= Polymer concentration [%];
C= Pyridine groups per gram of dry polymer [mmol/g];
D= Crosslinking percentage [%];
E= Amount of crosslinker [g];
F= Counter ion weight correction ($NO_3$ form) [g];
Mw1= Molar weight of crosslinker (337.97, 1.6 Diiodohexane).

**P(4-VPcS) membrane performance as a function of membrane thickness**

Membrane resistance was measured at 2M NaCl by direct current method and permselectivity was measured by membrane potential method (0.5M/0.05M KCl). IEC capacity was measure by exchanging counter ions. All methods are described in more details in Piotr Dlugolecki et. al. Journal of Membrane Science 319 (2008) 214-222.

Membrane thickness was investigated in order to evaluate influence on the membrane resistance, membrane

selectivity and membrane mechanical stability.

Table 1: Membrane performance as a function of membrane film thickness

| Casting thickness [μm] | Wet thickness [μm] | Resistance [Ω·cm$^2$] | Selectivity [%] |
|---|---|---|---|
| 60 | 19 | 1.00 | 97.8 |
| 90 | 25 | 1.22 | 97.4 |
| 120 | 41 | 1.51 | 98.2 |
| 180 | 59 | 2.12 | 98.4 |
| 240 | 68 | 2.56 | 97.9 |

P (4- VPcS) membrane resistance is a function of membrane thickness. The lowest resistance values were achieved for 60 and 90 microns casted samples. Selectivity for all samples thickness remains stable. For comparance the data with respect to example 4 hyperbranched copolymer 116 are depicted below. The electrical resistance is much higher than the linear copolymer 112, making the linear copolymer preferable.

| Hyperbranched copolymer 116 (pyridine : styrene 1:2.5) | | |
|---|---|---|
| Pyridine content | | 2.4mmol/g |
| Resistance (non-woven) | 120μm | 88 Ω·cm2 |
| | 180μm | 136 Ω·cm2 |
| Selectivity | | 97 % |
| Theoretical IEC | | 1.92 meq/g |

**Different dihalocabones (dihalo-alkanes) crosslinker investigation.**

Different dihalo-alkanes e.g. dihalides crosslinkers such as 1.6-diiodohexane, 1.5-dibromopentane, 1.6-dibromohexane and 1.10 dibromodecane were investigated. Casted membrane thickness was set to 120 microns.

Membrane performance with these crosslinkers were investigated.

| Crosslinker | Resistance [Ω·cm2] | Selectivity [%] | IEC [mmol/g] |
|---|---|---|---|
| 1.6-Diiodohexan | 1.48 | 97.1 | 2.22 |
| 1.6-Dibromohexan | 1.96 | 97.5 | 2.48 |
| 1.10-Dibromodecan | 2.15 | 97.6 | 2.42 |
| 1.5-Dibromopentan | 2.82 | 97.3 | 2.67 |

For all samples selectivity was similar, but resistance values differ. Different crosslinkers have different boiling point and vapor pressure and also influence IEC of the membrane at different level. Moreover, longer molecules changing polarity of membranes and the distance between ion exchange groups. 1.6-diiodohexane and 1.6-dibromohexane shows similar performance. Membrane resistance is lower for 1.6-diiodohexane, but also IEC is lower, which provides less interaction between counter ion and fixed charges in the membrane matrix. 1.10-dibromodecane is very comparable with 1.6-diiodohexane with respect to all performance. 1.5-dibromopentane has the highest resistance and highest IEC. Therefore, this effect is partly related with lower intermolecular distance and higher ion exchange capacity.

Anion exchange membranes (AEM's) were casted from P(4-VPcS) copolymer and were crosslinked with 1,6 diiodohexane. P(4-VPcS) AEM membranes with a thickness of 40 micrometer were used to build a CapDI module with 18 cells, where a cell consists of two electrodes, two current collectors, two membranes and a spacer. In one stack P (4-VPcS) AEM membranes were used and in another stack Neosepta CMX membranes. The cation exchange membrane was in both cases Neosepta CMX. The feed water in these experiments was made according to NSF 44 with a conductivity of 940μS/cm. All experiments were done at room temperature with a flow of 1.2 l/min/m$^2$ of spacer area. The operational cycle was 5 seconds of pre-desalination, followed by 175 seconds of desalination and 90 seconds of electrode regeneration. The experiments were performed with a set current of 5.5 A and 11 A during desalination and regeneration respectively.

Vinyl pyridine-styrene anion exchange membrane performance

| Sample nr | Resistance [Ω·cm2] | Selectivity [%] | IEC [mmol/g] | Water uptake [%] |
|---|---|---|---|---|
| 1 | 0.68 | 97.5 | 2.14 | 44 |
| 2 | 0.76 | 97.9 | 2.14 | 44 |
| 3 | 1.01 | 97.5 | 2.13 | 54 |
| 4 | 2.19 | 97.4 | | |
| Average | 1.16 | 97.6 | 2.14 | 47 |

Membranes have a very good performance. Selectivity for all samples is above 97%. Difference in resistance between samples might be explained by variation in membrane thickness (from 38 to 84μm). Ion exchange capacity of 2.14 mmol/g corresponds to 82% of group activation (2.14/2.62·100%).

Voltage (V) profile of time (s) is measured after 4h of constant current operation (figure 4) shows that voltage (V) during water desalination (desal) for P(4-VPcS) membranes is significantly lower than for reference (Ref) membrane. P(4-VPcS) membranes have lower resistance than the reference membrane and it will result in lower end voltage of the system. Moreover, also electrodes regeneration (Reg) is more complete due to fact that P(4-VPcS) membranes operate longer on constant current (later reaches the voltage limit).

Membranes performance after the test

After 3 days test membrane permselectivity and resistance was measured

| Sample nr. | Resistance [$\Omega \cdot cm^2$] | Selectivity [%] | IEC [mmol/g] | Wateruptake [%] | Thickness [μm] |
|---|---|---|---|---|---|
| $1^{st}$ | 0.77 | 96.7 | 2.16 | 23 | 71 |
| $5^{th}$ | 0.71 | 96.9 | 2.26 | 33 | 83 |
| $10^{th}$ | 0.99 | 96.7 | 2.29 | 39 | 68 |
| $14^{th}$ | 0.42 | 96.5 | 2.27 | 52 | 68 |

After the tests P(4-VPcS) membranes resistance seems to be on the same level as before the test. Membrane permselectivity and ion exchange capacity remained also at the same level.

P (4- VPcS) anion exchange membranes have a high selectivity for anions and at the same time a low resistance for ion transport. Moreover, the vinyl pyridine- styrene film is mechanically very strong and therefore no additional reinforcement is needed. Membranes show potential for capacitive deionization systems, but they can be also applied in various ion exchange processes.

Alternatively on could prepare an anion exchange membrane with anion exchange groups comprising:

- reacting at least a first monomer comprising a benzene derivative with a second monomer comprising a benzene derivative with a halide group to form a copolymer;
- providing a crosslinker comprising at least a first pyridine derivative group to the copolymer; and
- reacting the pyridine derivative of the crosslinker with the copolymers to crosslink the copolymers and at the same time to at least partially functionalize the pyridine derivative to form an anion exchange group.

The monomers may be formed by the first and second monomer comprising a vinylgroup and forming the copolymer comprises providing an initiator and a chain transfer agent to react the vinylgroups with eachother to polymerize the copolymer. The crosslinker may comprise two pyridine derivative groups which may crosslink the copolymers and may be functionalized to anion exchange groups.

Accordingly, the invention further provides the use of a crosslinked copolymer with ion exchange groups according to the invention, an ion exchange membrane according to the invention, or an apparatus according to the invention, for the removal of ions from water.

These and other aspects, features and advantages will become apparent to those of ordinary skill in the art

from reading the description and the appended claims. For the avoidance of doubt, any feature of one aspect of the present invention may be utilised in any other aspect of the invention. It is noted that the examples given in the description below are intended to clarify the invention and are not intended to limit the invention to those examples per se. Similarly, all percentages are weight/weight percentages unless otherwise indicated. Numerical ranges expressed in the format "from x to y" or "x-y" are understood to include x and y. When for a specific feature multiple preferred ranges are described in the format "from x to y", it is understood that all ranges combining the different endpoints are also contemplated.

## Claims

1. Method for preparing an anion exchange membrane with anion exchange groups comprising:

   reacting at least a first monomer comprising vinyl-pyridine with a pyridine derivative as a functional group with at least a second monomer comprising styrene to form a substantial linear copolymer;
   providing a crosslinker; and,
   reacting the substantially linear copolymer with the crosslinker, the crosslinker reacting with the pyridine derivative group of the substantially linear copolymer crosslinking the substantially linear copolymers and forming the anion exchange groups.

2. Method according to claim 1, wherein the molar ratio of the first monomer to the second monomer is 1 : 1 to 4 preferably around 1 : 2 to 3.

3. Method according to any of claims 1, or 2, wherein each of the first and second monomers comprise a vinylgroup and the reacting step to form a copolymer comprises providing an initiator and a chain transfer agent to react the vinylgroups with each other.

4. Method according to claim 3, wherein the chain transfer agent comprises a thiol group.

5. Method according to claims 3 or 4, wherein the first and second monomer and the chain transfer agent are provided in a molar ratio of from 1:1 to 4: 0.005 to 0.03 preferably 1:1,5 to 2: 0,01 to 0.014 to form the copolymer.

6. Method according to any of claims 1 to 5, wherein the crosslinker is a compound of the group of dihalocabones, preferably dihalo-alkanes.

7. Method according to claim 6, wherein the dihalo-alkanes is selected from 1.6-diiodohexane, 1.5-diodobromopentane, 1.6-dibromohexane and 1.10-dibromodecane.

8. Method according to any of claim 1 to 7, wherein anion exchange groups are formed by reacting the copolymer and/or the crosslinked polymer with a monohalocarbon before and/or during the reacting step of the copolymer with the crosslinker.

9. Method according to any of claims 1 to 8, wherein the anion exchange groups are formed by a quaternization reaction between the pyridine derivative and the monohalide and/or dihalides.

10. Method according to any of claims 1 to 9, wherein the reaction of the copolymers with the crosslinker is carried out at least partially on a surface of a first electrode.

11. Method according to any of claims 1 to 10 wherein the first monomer comprises at least one monomer selected form the group comprising : 4- vinylpyridine; 3- vinylpyridine; 2- vinylpyridine; 2- methyl- 5- vinylpyridine ; and 5- ethyl- 2- vinylpyridine.

12. Method according to any of claims 1 to 11, wherein the second monomer comprises at least one apolar styrene derivate or polar styrene derivate.

13. Method according to any of claims 1 to 12, wherein the second monomer comprises at lease one monomer selected from the group comprising: 4- tert- butoxystyrene; 2, 4- dimethylstyrene; 2, 5- dimethylstyrene; 3- methylstyrene; 4- methylstyrene; 2, 4, 6- trimethylstyrene 3, 4- dimethoxystyrene; 4- methoxystyrene; 3- hydroxystyrene; 4- hydroxystyrene and 4- acetoxystyrene.

**14.** Method according to any of the preceding claims wherein the number of pyridine groups as derived from H NMR data is between 1 to 5, preferably between 2 to 4, and most preferably between 2 to 3 Mol/Kg copolymer and/or the number average molecular weight (Mn) of the copolymer is between 2 and 5, preferably around 3.5 Kg/mol and the weight average molecular weight (Mw) of the copolymer is between 7 and 15, preferably around 10 Kg/mol.

**15.** An apparatus for removal of ions, the apparatus being provided with:

a first and second electrode; and,
an anion exchange membrane on the first electrode, wherein the anion exchange membrane is obtainable by crosslinking a substantially linear copolymer according to the method of claim 1.

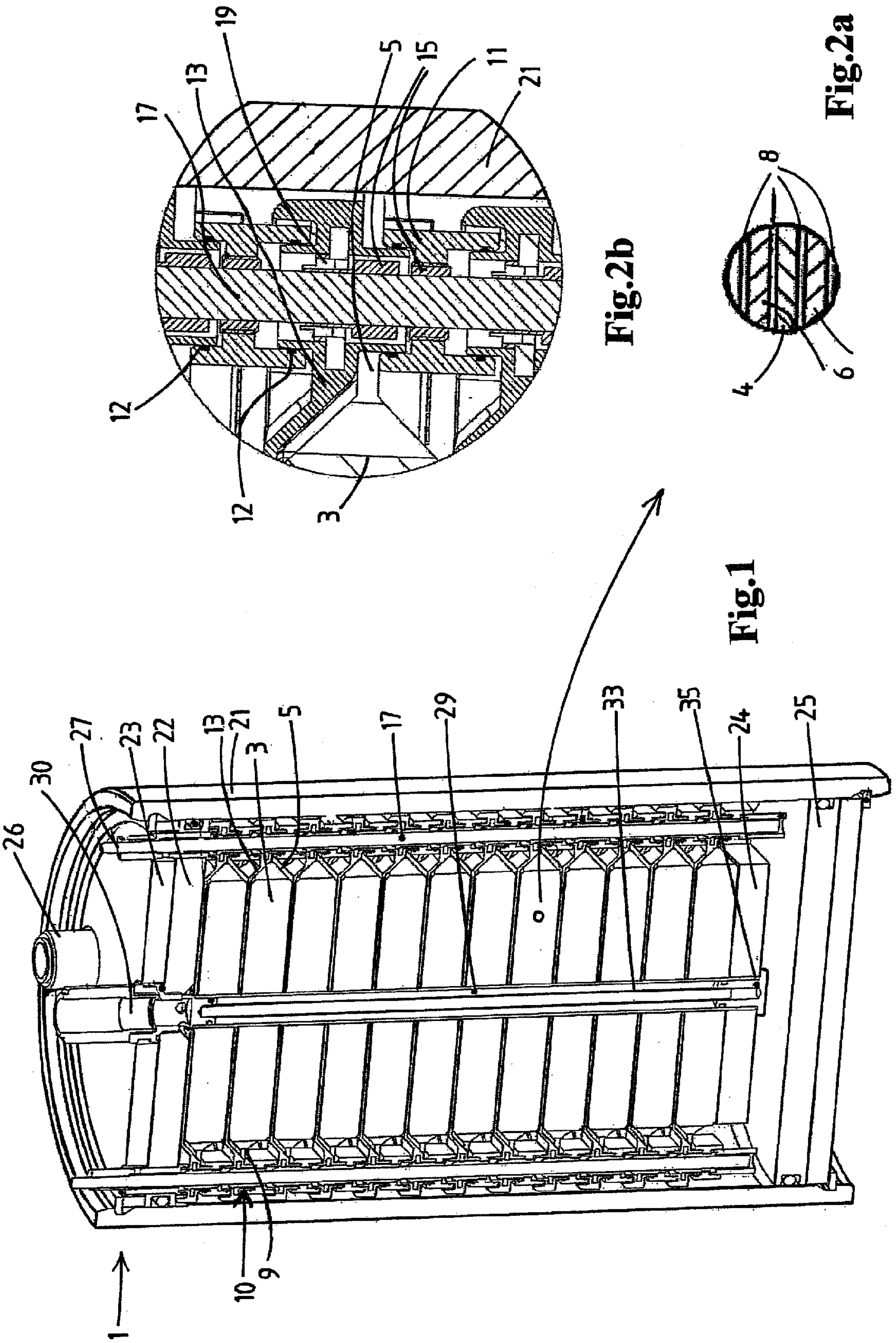


Fig.1

Fig.2b

Fig.2a

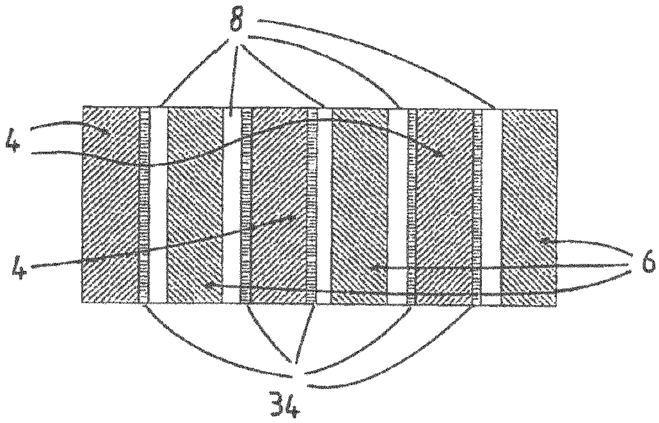


Fig.3

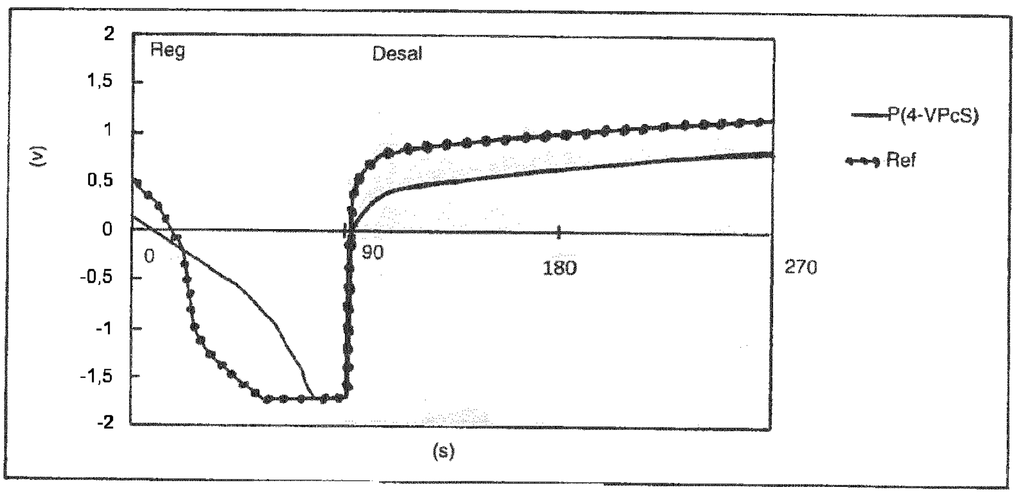


Fig.4

Europäisches Patentamt
European Patent Office
Office européen des brevets

# EUROPEAN SEARCH REPORT

Application Number
EP 13 16 0186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/033261 A1 (UNILEVER PLC [GB]; FINDLAY PAUL HUGH [GB]; TODD SHARON [GB]; RANNARD S) 24 March 2011 (2011-03-24)<br>* page 1, paragraphs 1,2 *<br>* pages 13-17, *<br>* pages 19-27 *<br>* example BP1 *<br>----- | 1-15 | INV.<br>B01D71/76<br>B01D67/00<br>C08F226/06<br>C08J5/22<br><br>ADD.<br>B01D71/28<br>B01D71/62 |
| X | US 3 935 086 A (MISUMI TERUYUKI ET AL) 27 January 1976 (1976-01-27)<br>* abstract *<br>* column 1, lines 40-55 *<br>* column 2, lines 3-8,35-43 *<br>----- | 1-3,11, 15 | |
| A | US 2011/305861 A1 (NISHIO KAZUNORI [JP] ET AL) 15 December 2011 (2011-12-15)<br>* the whole document *<br>----- | 1-14 | |
| A | US 5 304 610 A (BHATTACHARYA APURBA [US] ET AL) 19 April 1994 (1994-04-19)<br>* the whole document *<br>----- | 1-14 | |

TECHNICAL FIELDS SEARCHED (IPC)

B01D
C08F
C08J

The present search report has been drawn up for all claims

1

| Place of search | Date of completion of the search | Examiner |
|---|---|---|
| Munich | 19 June 2013 | Lançon, Eveline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 16 0186

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2013

| Patent document cited in search report | Publication date | Patent family member(s) | Publication date |
|---|---|---|---|
| WO 2011033261 A1 | 24-03-2011 | CN 102725316 A | 10-10-2012 |
| | | EP 2478015 A1 | 25-07-2012 |
| | | JP 2013505318 A | 14-02-2013 |
| | | US 2012178835 A1 | 12-07-2012 |
| | | WO 2011033261 A1 | 24-03-2011 |
| US 3935086 A | 27-01-1976 | NONE | |
| US 2011305861 A1 | 15-12-2011 | CN 102341439 A | 01-02-2012 |
| | | EA 201171162 A1 | 30-03-2012 |
| | | EP 2412751 A1 | 01-02-2012 |
| | | JP 2010222533 A | 07-10-2010 |
| | | KR 20120010224 A | 02-02-2012 |
| | | US 2011305861 A1 | 15-12-2011 |
| | | WO 2010110311 A1 | 30-09-2010 |
| US 5304610 A | 19-04-1994 | AU 6697394 A | 24-10-1994 |
| | | CA 2158555 A1 | 13-10-1994 |
| | | EP 0691990 A1 | 17-01-1996 |
| | | JP 3439214 B2 | 25-08-2003 |
| | | JP H08509756 A | 15-10-1996 |
| | | US 5304610 A | 19-04-1994 |
| | | WO 9422929 A1 | 13-10-1994 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **GAO ; YAN.** *Prog.Polym.Sci.,* 2004, vol. 29
- **O'BRIEN.** *Polymer,* 2000, vol. 41, 6027-6031
- **A.R. KATRIZKY et al.** *J. Org. Chem.,* 1986, vol. 51, 4914
- **PIOTR DLUGOLECKI.** *Journal of Membrane Science,* 2008, vol. 319, 214-222